# NEUE EUROPÄISCHE PATENTSCHRIFT

(11) **EP 0 542 155 B2**
(45) Veröffentlichungstag und Bekanntmachung des Hinweises auf die Entscheidung über den Einspruch: **25.06.2003**
(45) Hinweis auf die Patenterteilung: 23.09.1998
(21) Anmeldenummer: 92119060.9
(22) Anmeldetag: 06.11.1992
(51) Int. Cl.: C08L 1/10, C08L 3/02

(54) **Biologisch abbaubare Formmasse**
Biodegradable moulding composition
Masse à mouler biodégradable

(30) Priorität: 14.11.1991 CH 332091
(43) Veröffentlichungstag der Anmeldung: 19.05.1993
(73) Patentinhaber: bio-tec Biologische Naturverpackungen GmbH & Co. KG, 46446 Emmerich (DE)
(72) Erfinder: Tomka, Ivan, Ch-1722 Bourguillon (CH)
(74) Vertreter: Troesch Scheidegger Werner AG

(56) Entgegenhaltungen:
- EP-A- 0 298 920
- EP-A- 0 304 401
- EP-A- 0 326 517
- EP-A- 0 409 781
- EP-A- 0 409 782
- WO-A-90/05161
- WO-A-92/04408
- US-A- 3 329 509
- US-A- 3 954 104

## Beschreibung

Die vorliegende Erfindung betrifft eine biologisch abbaubare Formmasse bzw. einen Polymerblend mit gegenüber Wasser einer erhöhten Beständigkeit, ein Verfahren zur Herstellung einer Formmasse bzw. eines Polymerblends sowie ein Formteil bzw. ein Extrudat im wesentlichen bestehend aus einer Formmasse bzw. einem Polymerblend.

Aus dem Stand der Technik sind eine Reihe von Formmassen bekannt, die wenigstens teilweise aus Stärke oder Gelatine bzw. aus Biopolymeren bestehen und somit biologisch im wesentlichen abbaubar sind.

Ausgangspunkt für den vermehrten Einsatz von Biopolymeren wie Stärke oder Gelatine in an sich reinen Kunststoffanwendungen ist einerseits der Wunsch nach vermehrtem Einsatz von nachwachsenden Rohstoffen, im Gegensatz zu der auf petrochemischen bzw. fossilen Ausgangsbasis der Kunststoffe, und andererseits die Forderung, dass Kunststoffprodukte, die aus Polymeren hergestellt sind, biologisch abbaubar sein sollen. So werden u.a. in den EP-A 0 118 240, EP-A 0 092 908, EP A-0 304 401 und EP-A 0 326 517, US- 3 329 509 sowie US- 3 954 104, Biopolymere bzw. Formmassen aus destrukturierter Stärke bzw. Gelatine und anderen hydrophilen Biopolymeren wie Proteinen, Zellulose, etc. vorgeschlagen, geeignet insbesondere für Spritzgussanwendungen, wie beispielsweise die Herstellung von Kapseln. Die Verwendung von Stärke oder Gelatine allein oder in den vorgeschlagenen Mischungen ist auf wenige Anwendungen beschränkt, da sie einerseits problematisch sind aufgrund der stark hydrophilen Eigenschaften bzw. der Quellbarkeit der Stärke oder der Gelatine und anderseits aufgrund der doch eher relativ schlechten mechanischen Eigenschaften, welche sich bei der Verwendung von Stärke oder Gelatine bzw. deren Mischung ergeben. Durch Vernetzung der Stärkepolymere kann zwar die Quellbarkeit reduziert werden, dazu sind jedoch in der Regel hohe Vernetzungsdichten erforderlich. Dies erfordert grosse Mengen an Vernetzer, die relativ teuer sind und spezielle Verfahrensschritte zur Durchführung der entsprechenden Vernetzungsreaktionen erfordern.

So werden in der EP-A 0 402 826 gefüllte Polymere bzw. Polymerblends vorgeschlagen, zu deren Herstellung native Stärke oder deren Derivate mit Ethylencopolymerisaten gemischt werden. In der WO 90-14388 wird vorgeschlagen, zur Herstellung eines Polymerkomposits native Stärke mit Polyethylen zu mischen und alternativ entweder Ethylenacrylsäure-Copolymere oder Glyzerin beizufügen. Diese Polymermischungen zeigen selbst bei der Herstellung von gespritzten Formteilen relativ schlechte mechanische Eigenschaften und sind beispielsweise für die Herstellung von Folien ungeeignet. Es scheint, dass die native Struktur der Stärke in diesen Blends wenigstens teilweise erhalten bleibt, was sich offensichtlich schlecht auf deren Eignung als "engineering plastic" auswirkt. Auch ist der Anteil Ethylenacrylsäure-Copolymer dafür verantwortlich, dass die biologische Abbaubarkeit sehr begrenzt ist.

In den EP-A 0 327 505, EP-A 0 404 723, EP-A 0 407 350, EP-A 0 404 727 und EP-A 0 404 728 werden eine Reihe von Polymerblends vorgeschlagen, welche einerseits auf destrukturierter Stärke basieren und zudem verschiedenste strukturierter Stärke basieren und zudem verschiedenste Polymere bzw. Copolymere enthalten. Bei destrukturierter Stärke handelt es sich dabei um eine Stärkemodifikation, welche aus nativer Stärke erhalten wird, welche mit einem Feuchtigkeitsgehalt von ca. 15-20%, d.h. mit dem für die native Stärke üblichen Wassergehalt, unter Erhitzen und Zuführen von mechanischer Arbeit verarbeitet wird. In Untersuchungen, speziell im Zusammenhang mit der WO 90-05161 wurde gefunden, dass diese destrukturierte Stärke nur limitiert verwendbar ist als "engineering plastic", da offensichtlich nach wie vor native Strukturen in dieser Stärkeform vorliegen. Zudem sind die vorgeschlagenen Zuschlagspolymere zu Stärke nur schlecht oder über extrem lange Zeitperioden biologisch abbaubar, sodass sie die Anforderungen an die biologische Abbaubarkeit nicht erfüllen.

Weiter schlagen die EP-A 0 400 531 und EP-A 0 400 532 vor, die Stärke mittels eines hochsiedenden Plastifizierungsmittels und eines Destrukturierungsmittels zu destrukturieren, wobei es sich beispielsweise um Glyzerin als Plastifiziermittel und um Harnstoff als Destrukturierungsmittel handeln kann. Zusätzlich zu der so destrukturierten Stärke werden bis zu 15% Ethylenacrylsäure und/oder Polyvinylalcohol-Copolymere zugefügt. Durch das Plastifiziermittel wie auch das Destrukturierungsmittel kann wohl der Destrukturierungseffekt bei der nativen Stärke etwas verbesert werden, doch sind z.B. Folien, hergestell gemäss den beiden zitierten EP-A 0 400 531/32 qualitativ nicht ausreichend, um z.B. als Verpackungsfolien mit erhöhten mechnischen Anforderungen verwendet zu werden. Wiederum ist der Anteil Ethylenacrylsäure und Polyvinylalcohol-Copolymer dafür verantwortlich, dass die biologische Abbaubarkeit sehr beschränkt ist.

Aus diesem Grund wurde versucht, von der in der WO 90-05161 vorgeschlagenen thermoplastisch verarbeitbaren Stärke auszugehen, die weitgehendst frei von nativen Strukturelementen ist. Auf die Herstellung und Charakterisierung von thermoplastisch verarbeitbarer Stärke soll an dieser Stelle nicht nährer eingegangen werden, indem auf die WO 90-05161 verwiesen wird, deren Inhalt hiermit Bestandteil dieser Beschreibung ist.

Deshalb verwendet die WO 91-16375 für die Herstellung eines Polymerblends die erwähnte thermoplastisch verarbeitbare Stärke als Stärkebasis. Gemäss der WO 91-16375 wird die thermoplastisch verarbeitbare Stärke (TPS) zur Herstellung eines Blends mit Polyolefin, wie beispielsweise Polyethylen oder Polypropylen gemischt. Die aus diesem Blend hergestellten Folien zeigen an sich gute mechanische Eigenschaften und gute Wasserbeständigkeit, wobei allerdings nach wie vor die biologische Abbaubarkeit durch den Anteil Polyolefin negativ beeinflusst wird.

Es ist deshalb eine Aufgabe der vorliegenden Erfindung, eine biologisch abbaubare Formmasse bzw. einen Polymerblend mit gegenüber Wasser erhöhter. Beständigkeit vorzuschlagen, welche bzw. welcher zumindest zu einem grossen Teil auf nachwachsenden Rohstoffen basiert und trotzdem gute mechanische Eigenschaften beim Einsatz in sog. Kunststoffanwendungen aufweist.

Erfindungsgemäss wird diese Aufgabe mittels einer Formmasse bzw. einem Polymerblend nach dem Wortlaut von Anspruch 1 gelöst.

Die erfindungsgemäss vorgeschlagene Formmasse zeichnet sich dadurch aus, dass sie nebst der an sich hydrophilen thermoplastisch verarbeitbaren Stärke ein Zellulosederivat, wie einen Zelluloseester, enthält, womit beide den Werkstoff bildenden Komponenten zu 100% aus biologischen Ressourcen stammen. Die biologische Abbaubarkeit ist somit im wesentlichen gegeben. Trotzdem aber ergeben sich durch den Zusatz an Zelluloseester gegenüber reiner thermoplastisch verarbeitbarer Stärke stark verbesserte mechanische Eigenschaften.

Die Formmasse zeichnet sich dadurch aus, dass die thermoplastisch verarbeitbare Stärke in einer Matrix aus Zelluloseester eingekapselt ist, wobei die dispergierte Phase der thermoplastisch verarbeitbaren Stärke eine Domänengrösse, d.h. Grösse der dispergierten Teile, von 0,5-10 µm (Mikrometer), vorzugsweise jedoch < 3 µm aufweist.

Im weiteren zeichnet sich der Polymerblend durch einen Phasenvermittler aus, der durch physikalische Wechselwirkung und/ oder chemische Reaktion mit der Celluloseesterphase und der thermoplastisch verarbeitbaren Stärkephase eine Verbesserung der Adhäsion der beiden Phasen ermöglicht. Als Phasenvermittler eignen sich insbesondere ein oder mehrere Vertreter der in Anspruch 1 vorgeschlagenen Phasenvermittler.

Bevorzugte Zusammensetzungen der erfindungsgemäss vorgeschlagenen Formmasse bzw. des Polymerblends sind in den abhängigen Ansprüchen 2 bis 4 charakterisiert.

Dabei ist es vorteilhaft, ca. 20-50 Vol.% an thermoplastisch verarbeitbarer Stärke zu verwenden und ca. 30-60 Vol.% an Zelluloseester, wobei es sich beispielsweise um Zelluloseacetat, Zellulosepropionat, Zellulosebutyrat oder Zellulosevaleriat handeln kann, oder einer Mischung davon. Beim Zelluloseacetat kann es sich um Mono-, Di- oder Triacetat handeln, wobei selbstverständlich auch andere Zelluloseester wie beispielsweise Mischester verwendet werden können, wobei zu deren Herstellung eine Mischung mehrerer Carbonsäuren verwendet werden kann, beispielsweise umfassend zwei oder mehrere der nachfolgenden Säuren: Essigsäure, Propansäure, Buttersäure, Valeriansäure.

Zur Verbesserung der Phasendurchmischung kann die Formmasse bzw. der Polymerblend einen Weichmacher beinhalten, wobei der Weichmacher zugesetzt wird, um die Viskositäten der beiden Phasen bei der Herstellung der Formmasse so einzustellen, dass die richtige Morphologie erzeugt werden kann. Als Weichmacher kommen die für Zelluloseester bekannten Weichmacher in Frage, wie Acetyltriethylcitrat oder Phtalsäureester.

Für die Herstellung der erfindungsgemäss vorgeschlagenen Formmassen bzw. Polymerblends schlägt die Erfindung ein Verfahren vor, bei dem die an sich hydrophile thermoplastisch verarbeitbare Stärke durch Zuschlag von einem Zelluloseester zu einem Werkstoff mit verringerter Wasseraufnahme verarbeitet wird. Wie erwähnt, ist dieser Werkstoff somit zu 100% aus biologischen Ressourcen darstellbar, womit die biologische Abbaubarkeit im wesentlichen gegeben ist. Weitere bevorzugte erfindungsgemässe Ausführungsvarianten des Verfahrens sind in den Unteransprüchen 5 bis 7 charakterisiert.

Die erfindungsgemäss vorgeschlagenen Formmassen bzw. Polymerblends eignen sich im wesentlichen für alle bekannten sog. Kunststoffanwendungen, d.h. für die Herstellung von Spritzgussteilen wie auch für die Herstellung von Extrudaten wie Folien oder Schläuchen.

Die Erfindung wird nun anschliessend anhand von Beispielen und unter Bezug auf die beigefügten Figuren näher erläutert. Dabei zeigen;
Fig. 1 graphisch dargestellt, die Zugspannung eines Polymerblends als Vergleichsversuche, in Abhängigkeit des Volumenanteils an thermoplastisch verarbeitbarer Stärke,
Fig. 2 die Bruchenergie in Abhängigkeit des Volumenanteils an TPS;
Fig. 3 den Einfluss durch einen Zusatz an Weichmacher bzw. eines Phasenvermittlers auf die Bruchdehnung eines erfindungsgemässen Polymerblends;
Fig. 4 den Einfluss eines Weichmachers bzw. Phasenvermittlers auf die Fliessspannung;
Fig. 5 den Einfluss des Weichmachers bzw des Phasenvermittlers auf die Zugspannung:
Fig. 6 den Einfluss des Weichmachers bzw. Phasenvermittlers auf die Bruchenergie;
Fig. 7a und 7b die Wirkung eines Weichmachers auf die gegenseitige Phasenanordnung in einer erfindungsgemässen Formmasse mittels einer Rasterelektronenmikroskopaufnahme, bzw schematisch dargestellt;
Fig. 8a und 8b die entsprechende Wirkung eines Phasenvermittlers auf die gegenseitige Phasenanordnung, ebenfalls mittels Rasterelektronenmikroskopaufnahme, bzw. schematisch dargestellt, und
Fig. 9 die Wassersorption eines Polymerblends in Abhängigkeit des Volumenanteils an thermoplastisch verarbeitbarer Stärke.

### 1. Beispiel Vergleichsversuche: Mischungen von thermoplastisch verarbeitbarer Stärke mit Zelluloseacetobutyrat (CAB).

Ausgangsmaterialien: Granulat aus im wesentlichen wasserfreier thermoplastisch verarbeitbarer Stärke mit 30% Glyzerin und Zelluloseacetobutyrat (Kodak Tenite Butyrate 525 Granulat).

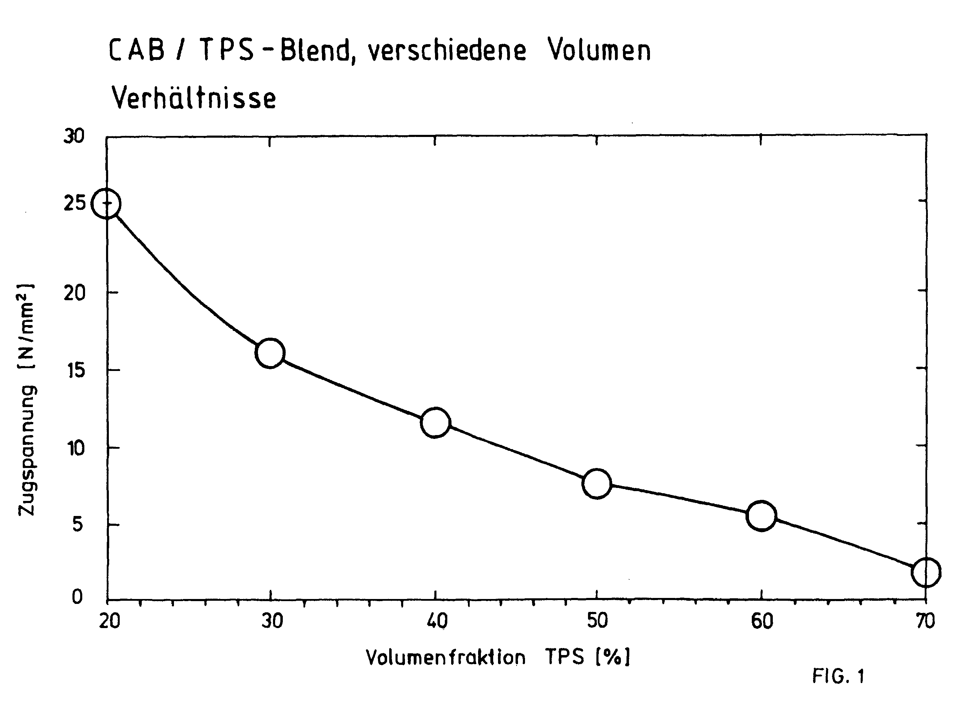

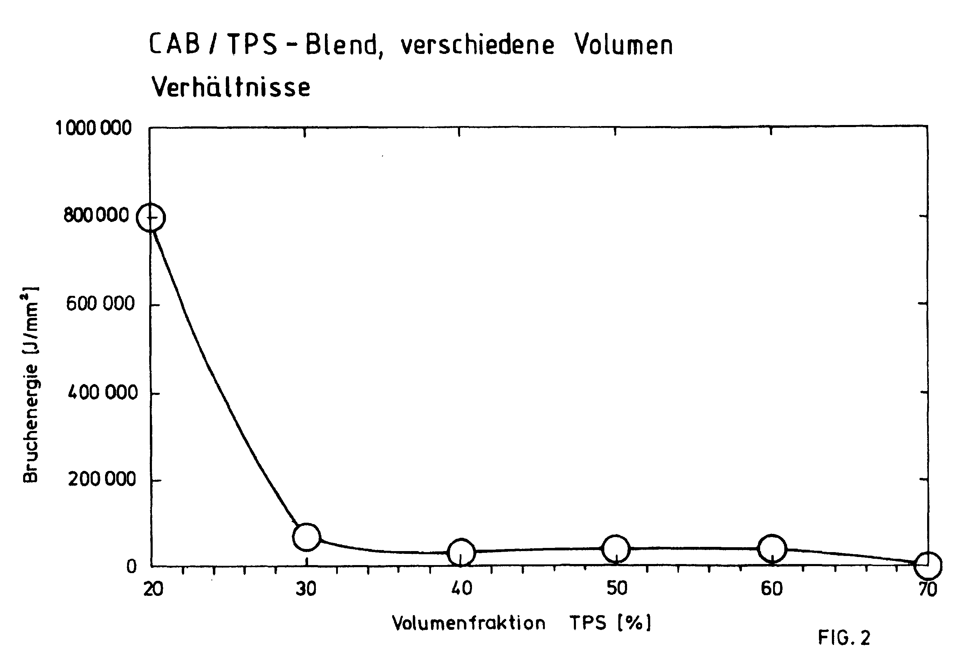

Die Mischung aus den beiden oben angeführten Materialien wurde 10 Min. bei 170°C in einem Brabender Kneter bei 100 Upm gemischt und anschliessend bei 160°C zu 0,2 mm Platten gepresst. Der Volumenanteil thermoplastisch verarbeitbarer Stärke betrug dabei 20-70%. In den Figuren 1 und 2 sind einerseits die Zugspannung und anderseits die Bruchenergie in Abhängigkeit des Volumenanteils thermoplastisch verarbeitbarer Stärke dargestellt. Aus dem Verlauf der in den beiden Figuren 1 und 2 dargestellten Kurve ist klar erkennbar, dass sich die mechanischen Eigenschaften der Formmasse mit einem Volumenanteil von 30-40% an thermoplastisch verarbeitbarer Stärke stark verschlechtern.

Die in diesem Beispiel vorgeschlagene Formmasse eignet sich für Spritzguss, wobei jedoch auf keinen Fall mehr als 40% thermoplastisch verarbeitbare Stärke verwendet werden sollte.

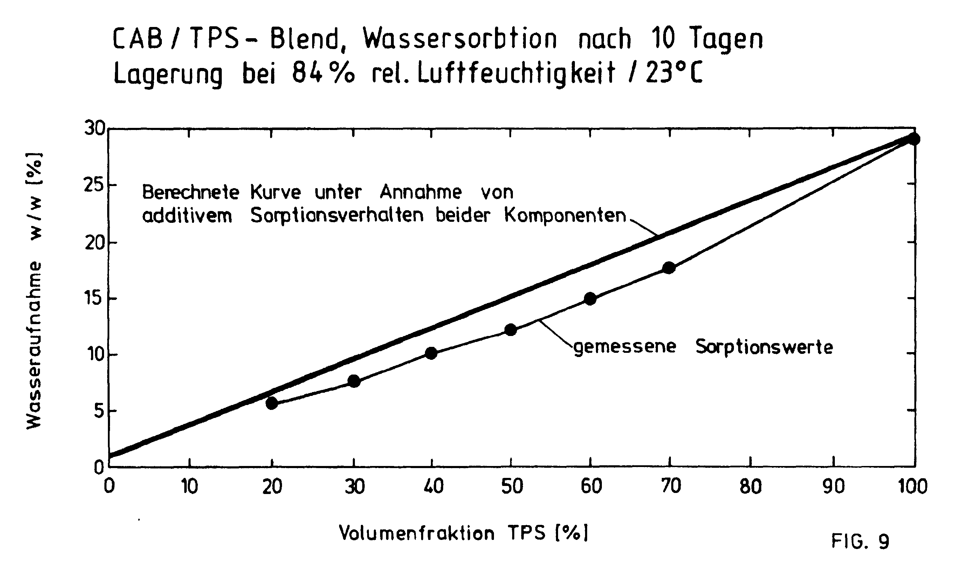

Von den gemäss dem 1. Beispiel hergestellten Mischungen von thermoplastisch verarbeitbarer Stärke mit Zelluloseacetobutyrat (CAB) wurde zudem die Wassersorption ermittelt, indem Proben, hergestellt aus den entsprechenden Blends, 10 Tage bei einer relativen Luftfeuchtigkeit von 84 % bei 23° C gelagert wurden. Die entsprechenden Resultate sind in Fig. 9 dargestellt, wobei die Wasseraufnahme als Funktion des Volumenanteiles von TPS in der Probe dargestellt ist. Dabei ist die Wasseraufnahme als Gewichtsanteil des Wassers in der feuchten Probe zu verstehen. Aus Fig. 9 ist nun deutlich zu erkennen, dass die Wassersorption der gemäss Beispiel 1 hergestellten Blends deutlich unter demjenigen Wert liegt, der unter Annahme von additivem Sorptionsverhalten der beiden Komponenten TPS und CAB errechnet werden kann. Daraus ergibt sich eine weitere Eigenschaft der gemäss Beispiel 1 hergestellten Blends, nämlich dass die Wassersorption durch Herstellen des Blends deutlich reduziert werden kann.

### 2. Beispiel: Mischung aus thermoplastisch verarbeitbarer Stärke mit Zelluloseacetobutyrat und Acetyltriethylcitrat als Weichmacher.

Ausgangsmaterialien: Granulate aus im wesentlichen wasserfreier thermoplastisch verarbeitbarer Stärke mit 30% Glyzerin, Zelluloseacetobutyrat (CAB, Kodak Tenite Butyrate 525 Granulat) und Acetyltriethylcitrat (von Akzo).

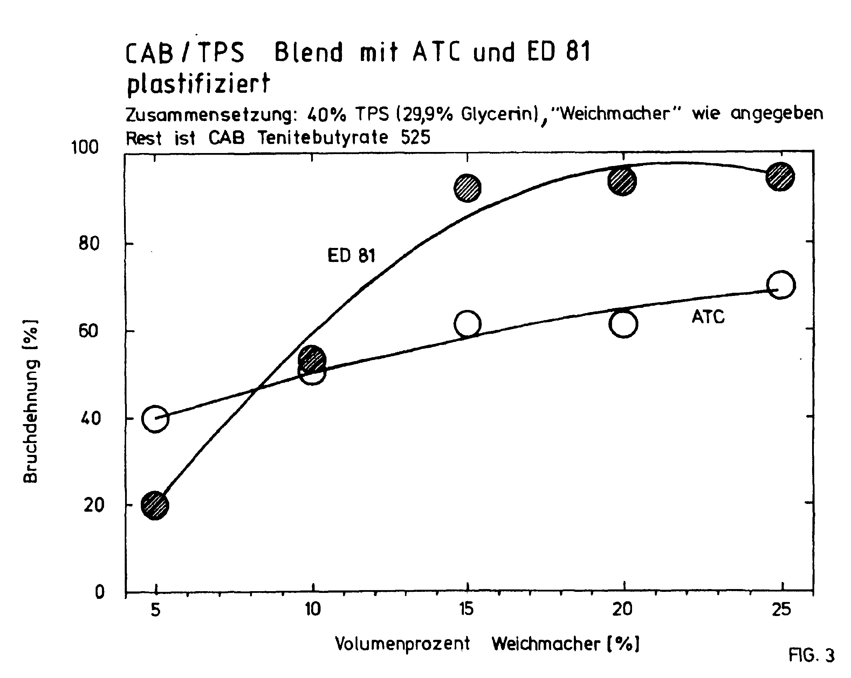

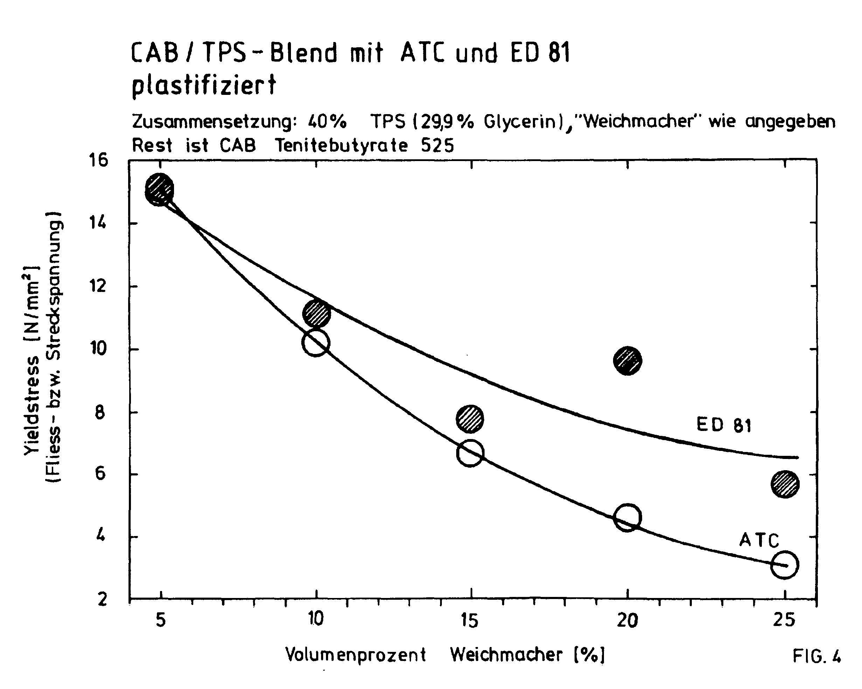

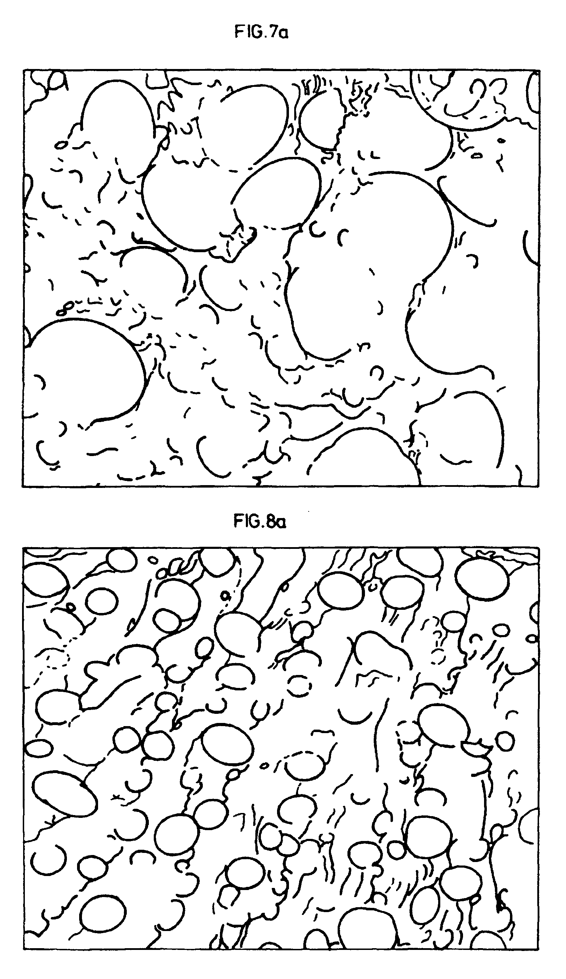

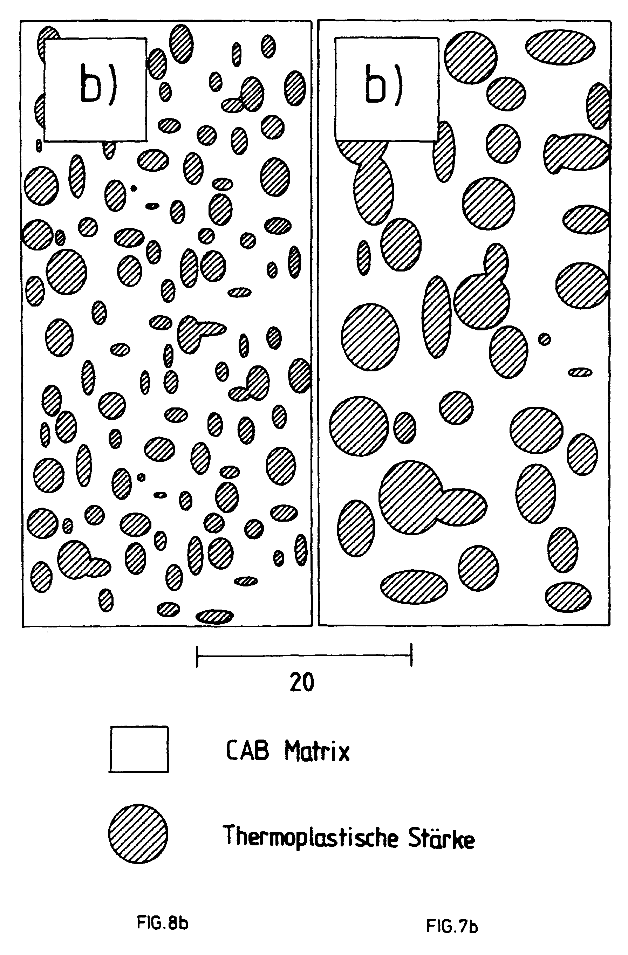

Mischungen aus den drei oben erwähnten Materialien wurden während 10 Min. bei 170°C in einem Brabender Kneter bei 100 Upm gemischt und anschliessend bei 160°C zu 0,2 mm Platten gepresst. Der Volumenanteil an thermoplastisch verarbeitbarer Stärke betrug dabei 40%, an Zelluloseacetobutyrat 35-55 % und der Volumenanteil an Weichmacher 5-25%. Die erhaltenen mechanischen Werte sind in den Figuren 3 bis 6 dargestellt. Fig. 7 zeigt eine Rasterelektronenmikroskopaufnahme derjenigen Probe mit den besten mechanischen Eigenschaften.

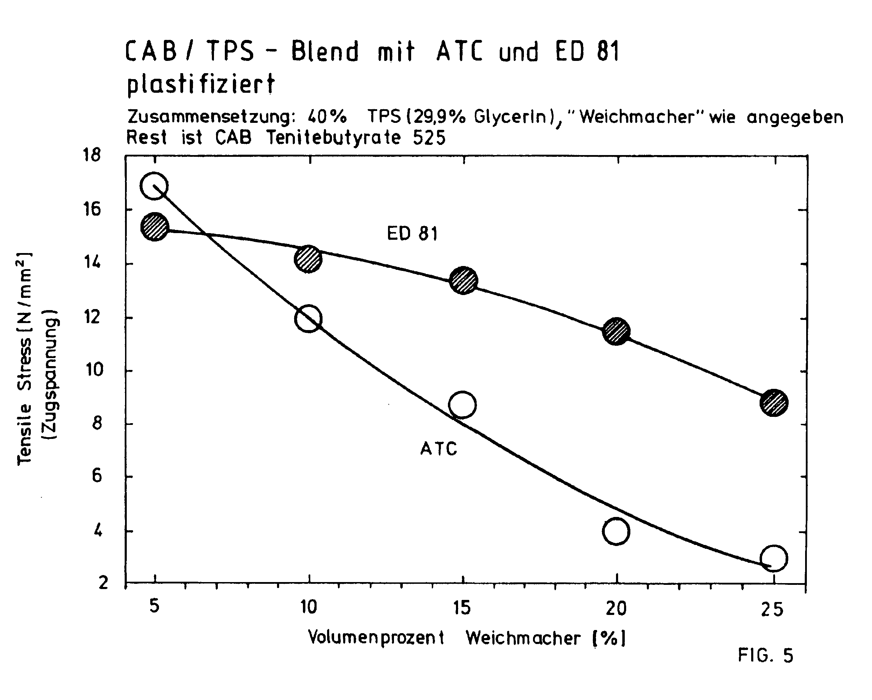

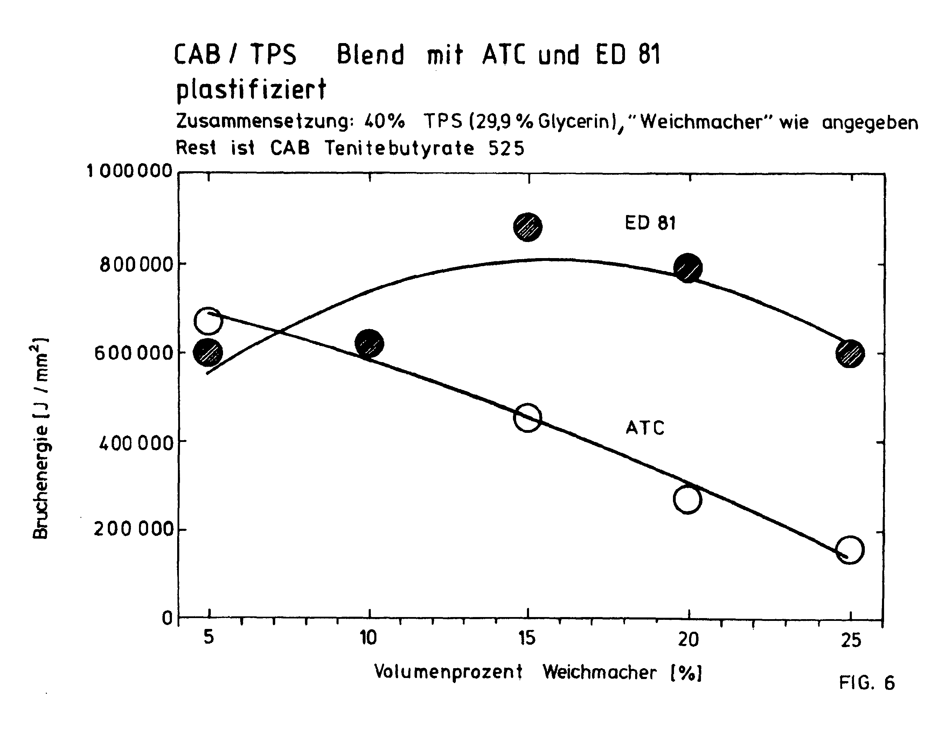

Ein Vergleich der beiden Figuren 1 und 5 zeigt, dass ein kleiner Zusatz an Weichmacher, wie beispielsweise 5 Vol.%, eine Erhöhung der Zugspannung des Polymerblends um ca. 30% mit sich bringt. Bei einem Zusatz von 10 Vol. % an Weichmacher ist der Wert für die Zugspannung identisch mit demjenigen von Fig. 1, d.h. wie ohne Zusatz an Weichmacher. Die weitere Erhöhung des Volumenanteils an Weichmacher beeinflusst die Zugspannung negativ. Ein Vergleich der beiden Figuren 2 und 6 dagegen zeigt ein etwas anderes Bild, indem hier ein Anteil an 5 Vol.% an Weichmacher die Bruchenergie eines Polymerblends ganz erheblich gegenüber dem Wert steigert, wo kein Weichmacher verwendet wird. Selbst ein Anteil an 25 Vol.% Weichmacher zeigt immer noch eine deutlich bessere Bruchenergie als im Falle, wo kein Weichmacher verwendet wird.

Polymerblends, hergestellt nach diesem Beispiel, können Bruchdehnungen bis zu 80% erreichen, sodass sich diese Formmassen neben Spritzguss auch für Folien und Filmextrusion eignen. Somit weisen die Mischungen von diesem Beispiel mindestens in bezug auf Bruchdehnung wesentlich bessere Eigenschaften auf, als die Mischungen von Beispiel 1.

### 3. Beispiel: thermoplastisch verarbeitbare Stärke, Zelluoseacetobutyrat (CAB) und epoxidiertes Soyaöl als Phasenvermittler.

Ausgangsmaterialien: Granulate aus thermoplastisch verarbeitbarer Stärke mit 30% Glyzerin, Zelluloseacetobutyrat (Kodak Tenite Butyrat 525 Granulat) und epoxidiertes Soyaöl (ED 81 der Fa. Henkel).

Mischungen aus den drei genannten Ausgangsmaterialien wurden durch 10-minütiges Kneten bei 170°C in einem Brabender Kneter bei 100 Upm gemischt und anschliessend bei 160°C zu 0,2 mm Platten gepresst. Der Anteil thermoplastisch verarbeitbarer Stärke betrug dabei 40 Vol.%, der CAB Volumenanteil 35-55% und der Anteil epoxidiertes Soyaöl 5-25 Vol.%. Die erhaltenen mechanischen Daten sind wiederum in den Figuren 3 bis 6 grafisch dargestellt. Fig. 8 zeigt eine Rasterelektronenmikroskopaufnahme derjenigen Probe mit den besten mechanischen Eigenschaften.

Aus den Figuren 3 bis 6 wird deutlich, dass durch die Verwendung eines Phasenvermittlers als "Weichmacher" die mechanischen Eigenschaften z.T. stark gegenüber denjenigen Mischungen gesteigert werden können, wo weder Phasenvermittler noch Weichmacher, oder nur ein reiner Weichmacher verwendet wird. Insbesondere wird aus Fig. 3 deutlich, dass mit den in diesem Beispiel hergestellten Mischungen bis zu 100% Bruchdehnung erreicht werden kann.

Aufgrund der guten mechanischen Eigenschaften, insbesondere der ausgezeichneten Bruchdehnung, eignen sich die in diesem Beispiel vorgeschlagenen Formmassen neben Spritzguss insbesondere für Folien und generell für Extrusion. Gegenüber den Mischungen von Beispiel 1 und 2 ergeben sich beträchtliche Verbesserungen der mechanischen Eigenschaften. Durch Infrarotspektroskopie konnte zudem eine teilweise Reaktion der Epoxidgruppen mit der Stärke und/oder dem Glyzerin nachgewiesen werden.

Wie weiter ein Vergleich der Figuren 7a,b und 8a,b zeigt, ist die gegenseitige Phasenverteilung der thermoplastisch verarbeitbaren Stärke und des Zelluloseesters wesentlich gleichmässiger bei einer Verwendung des Phasenvermittlers (Fig. 8) als bei der Verwendung eines reinen Weichmachers, wie dargestellt in Fig. 7. Diese uniformere gegenseitige Verteilung ist wohl auch der Grund, weshalb die mechanischen Eigenschaften bei Verwendung eines Phasenvermittlers wesentlich besser sind als bei Verwendung eines reinen Weichmachers. Dabei zeigen jeweils die Fig. 7a und 8a Rasterelektronenmikroskopaufnahmen und die beiden Fig. 7b und 8b grafische Umsetzungen der REM-Aufnahmen.

### 4. Beispiel: thermoplastisch verarbeitbare Stärke/Zelluloseacetobutyrat (CAB)/epoxidiertes Soyaöl als Phasenvermittler und teilacetylierte Stärke als zusätzlicher Phasenvermittler.

Ausgangsmaterialien: Granulate aus im wesentlichen wasserfreier thermoplastisch verarbeitbarer Stärke mit 30% Glyzerin, Zelluloseacetobutyrat (Kodak Tenite Butyrat 525 Granulat), epoxidiertes Soyaöl (ED 81 der Fa. Henkel) und teilacetylierte Stärke, hergestellt nach der Mehltreter Methode (Lit), hergestellt in Acetanhydrid mit einem Substitutionsgrad DS von 0,83, 1,2, 1,94 und 2,0.

Mischungen aus den vier oben angeführten Materialien wurden während 10 Min. bei 170°C in einem Brabender Kneter bei 100 Upm gemischt und anschliessend bei 160°C zu 0,2 mm Platten gepresst. Der Anteil thermoplastisch verarbeitbarer Stärke betrug dabei zwischen 34% und 38%, der Volumenanteil des Zelluloseesters (CAB) 39-43%, Volumenanteil des epoxidierten Soyaöls 15% und Volumenanteil der acetylierten Stärke 4-12%. Die genauen Zusammensetzungen sind der nachfolgenden Tabelle 1 zu entnehmen. Ebenfalls sind in dieser Tabelle die entsprechenden mechanischen Daten aufgeführt.

Der in der nachfolgenden Tabelle 1 angegebene Substitutionsgrad DS ist eine Angabe, wie viel Hydroxylgruppen der Anhydroglycoseeinheit der Stärke verestert sind. DS 3 bedeutet beispielsweise, dass alle drei Hydroxylgruppen verestert sind, also der maximale Substitutionsgrad.

**Tabelle 1**

| **Mischungen mit teilacetylierten Stärken** | | | | | | | |
|---|---|---|---|---|---|---|---|
| a) | | | | | | | |
| Substitutionsgrad DS = 0.83 | | | | | | | |
| CAB Vol% | TPS Vol% | Acet. Stärke Vol% | Streckspannung N/mm² | Bruch % | Zugspannung N/mm² | Bruchdehnung % | Brucharbeit J/mm² |
| 43 | 38 | 4 | 7.3 | 6.2 | 10.4 | 67 | 550000 |
| 41 | 36 | 8 | 7.5 | 6.6 | 10.6 | 70.5 | 590000 |

| b) | | | | | | | |
|---|---|---|---|---|---|---|---|
| Substitutionsgrad DS = 1.2 | | | | | | | |
| CAB Vol% | TPS Vol% | Acet. Stärke Vol% | Streckspannung N/mm² | Bruch % | Zugspannung N/mm² | Bruchdehnung % | Brucharbeit J/mm² |
| 43 | 38 | 4 | 7.5 | 5.9 | 10.3 | 66 | 530000 |
| 41 | 36 | 8 | 7.9 | 6.81 | 9.3 | 48 | 460000 |
| 39 | 34 | 12 | 7.9 | - | 8 | 43 | 300000 |

| c) | | | | | | | |
|---|---|---|---|---|---|---|---|
| Substitutionsgrad DS = 1.94 | | | | | | | |
| CAB Vol% | TPS Vol% | Acet. Stärke Vol% | Streckspannung N/mm² | Bruch % | Zugspannung N/mm² | Bruchdehnung % | Brucharbeit J/mm² |
| 43 | 38 | 4 | 7.7 | 7.36 | 11.6 | 82.2 | 720000 |
| 41 | 36 | 8 | 7.5 | 5.22 | 11.6 | 80 | 700000 |
| 39 | 34 | 12 | 6.5 | 7.36 | 9.5 | 71 | 540000 |

| d) | | | | | | | |
|---|---|---|---|---|---|---|---|
| Substitutionsgrad DS = 2.0 | | | | | | | |
| CAB Vol% | TPS Vol% | Acet. Stärke Vol% | Streckspannung N/mm² | Bruch % | Zugspannung N/mm² | Bruchdehnung % | Brucharbeit J/mm² |
| 43 | 38 | 4 | 7.5 | 6.04 | 9.9 | 56 | 450000 |
| 41 | 36 | 8 | 7.8 | 6.07 | 8.6 | 41 | 310000 |
| 39 | 34 | 12 | 7.8 | 7.46 | 9.8 | 63 | 520000 |

Der Vorteil eines Zusatzes an teilacetylierter Stärke liegt einerseits darin, dass dadurch der Stärkeanteil vergrössert werden kann, wodurch andererseits der Anteil an Zelluloseacetat verringert wird, und die Phasenhaftung zwischen den beiden Phasen - thermoplastisch verarbeitbare Stärke und Zelluloseester - verbessert werden kann, sodass beispielsweise bei aus einem derartigen Polymerblend hergestellten Folien kein Weissbruch mehr auftritt. Zudem wird durch den höheren Stärkeanteil die biologische Abbaubarkeit stark verbessert, allerdings nimmt die Festigkeit bei einem erhöhten Anteil an teilacetylierter Stärke etwas ab.

Die vorab beschriebenen Beispiele für die Darstellung einer erfindungsgemässen Formmasse bzw eines Polymerblends dienen dem besseren Verständnis der Erfindung und können selbstverständlich in einer x-beliebigen Art und Weise abgeändert bzw. modifiziert werden. So können als Zellulosederivate insbesondere alle in Anspruch 1 definierten Zelluloseester verwendet werden, und als Weichmacher eignen sich alle gemäss Anspruch 1 definierten Substanzen, die entweder für Zelluloseester oder aber für Stärke als Weichmacher bzw. Plastifizierungsmittel verwendet werden.

## Patentansprüche

1. Biologisch abbaubare Formmasse bzw. Polymerblend mit gegenüber Wasser einer erhöhten Beständigkeit, mindestens enthaltend thermoplastisch verarbeitbare Stärke, ein Celluloseester sowie 5-25 Vol.% eines Phasenvermittlers, der durch physikalische Wechselwirkung und/oder chemische Reaktion mit der Cellulose-ester-phase und der Phase der thermoplastisch verarbeitbaren Stärke eine Verbesserung der Adhäsion der beiden Phasen ermöglicht, wobei
der Phasenvermittler aus der Liste der nachfolgenden Materialien ausgewählt ist:
- Blockcopolymere, die mindestens aus zwei Blöcken A und B bestehen, von denen mindestens einer mit der Phase der thermoplastisch verarbeitbaren Stärke und mindestens einer mit der Celluloseesterphase mindestens teilweise mischbar ist:
- reaktive Copolymere die reaktive Gruppen tragen und so eine kovalente Bindung mit der Stärke und/oder der Celluloseesterphase eingehen können;
- epoxydiertes Soyaöl,
- Stärkeacetat,
- ein Stärkegraftcopolymere, bei dem ein mit dem entsprechenden Celluloseester kompatibles Polymer durch kovalente Bindung mit der Stärke verbunden ist,
- ein Cellulose-graftcopolymer, bei welchem das Celluloseestermolekül mit einem mit der Stärke kompatiblen Polymer gegraftet ist,
- Acetyltriethylcitrat oder Phthalsäureester, und wobei thermoplastisch verarbeitbare Stärke destrukturierte Stärke nicht umfasst.
und wobei als celluloseester Celluloseacetat, -propionat und/oder -butyrat oder ein Gemisch davon oder ein Mischester verwendet wird, bei dessen Herstellung als Veresterungskomponente ein Säuregemisch, mindestens zwei der nachfolgenden Carbonsäuren enthaltend, verwendet wird:
- Essigsäure,
- Propansäure,
- Buttersäure,
- Valeriansäure.

2. Formmasse bzw. Polymerblend nach Anspruch 1, enthaltend einen Anteil von 10-80 Vol.% thermoplastisch verarbeitbare Stärke und als Restanteil mindestens teilweise Celluloseester.

3. Formmasse bzw. Polymerbiend nach einem der Ansprüche 1 oder 2, enthaltend einen Anteil von 20-50 Vol.% thermoplastisch verarbeitbare Stärke.

4. Formmasse bzw. Polymer nach einem der Ansprüche 1 bis 3, **dadurch gekennzeichnet, dass** der Phasenvermittler aus der Liste der nachfolgenden Materialien ausgewählt ist:
- teil-hydrolisiertes Polyvinylacetat oder Polyvinylacetat-Polyvinylpyrrolidin-Blockcopolymer, oder
- Polyvinylacetat, das mit geringen Mengen an Maleinsäureanhydrid copolymerisiert wird, oder Polyvinylacetat, das mit geringen Mengen an Acrylsäureglycidestern copolymerisiert wird.

5. Verfahren zur Herstellung einer Formmasse bzw. eines Polymerblends nach einem der Ansprüche 1 bis 4, **dadurch gekennzeichnet**, das 10 bis 80 Vol.% von im wesentlichen wasserfreier thermoplastisch verarbeitbarer Stärke 5 bis 25 Vol.% des Phasenvermittlers und der Rest an Cellulose-ester bei erhöhter Temperatur in der Schmelze gemischt werden, wobei der Phasenvermittler dazu dient, durch physikalische Wechselwirkung und/oder chemische Reaktion mit der Cellulose-ester phase und der Phase der thermoplastisch verarbeitbaren Stärke eine Verbesserung der Adhäsion der beiden Phasen in der Schmelze ermöglicht.

6. Verfahren nach Anspruch 5, **dadurch gekennzeichnet, dass** das Mischen in einem Temperaturbereich von 160 bis 200°C in der Schmelze erfolgt.

7. Verfahren nach einem der Ansprüche 5 oder 6, **dadurch gekennzeichnet, dass** 20 bis 50 Vol.% an thermoplastisch verarbeitbarer Stärke, 30 bis 60 Vol.% des Celluloseesters mit 5 bis 25 vol.% eines Phasenvermittlers, bei einer Temperatur von ca. 160 bis 200°C eng durchmischt bzw. geknetet werden und die wenigstens nahezu homogene Masse anschliessend extrudiert oder mittels Spritzgusstechnik verarbeitet wird.

8. Spritzgussteil bzw. Extrudat, bestehend im wesentlichen aus einer Formmasse bzw. einem Polymerblend nach einem der Ansprüche 1 bis 4.

## Claims

1. Biologically degradable moulding mass or polymer blend with increased resistance in relation to water, at least comprising thermoplastically processible starch, a cellulose ester as well as 5 to 25 volume % of a phase agent which through physical interaction and/or chemical reaction with the cellulose ester phase and the phase of the thermoplastically processible starch enables an improvement of the adhesion of the two phases, wherein the phase agent is selected from the list of following materials:
- block copolymers which consist of at least two blocks A and B, of which at least one is at least partially miscible with the phase of thermoplastically processible starch and at least one is at least partially miscible with the cellulose ester phase;
- reactive copolymers, which carry reactive groups and thus can enter into a covalent bond with the starch and/or the cellulose ester phase;
- epoxydised soya oil,
- starch acetate
- a starch graft copolymer in which a polymer compatible with the corresponding cellulose ester is connected with the starch by covalent bonding,
- a cellulose graft copolymer in which the cellulose ester molecule is grafted with a polymer compatible with the starch,
- acetyl triethyl citrate or phthalic acid ester,and wherein thermoplastic processible starch does not comprise destructured starch,
and wherein as cellulose ester there is used cellulose acetate, cellulose propionate and/or cellulose butyrate or a mixture thereof or a mixed ester in the production of which an acid mixture containing at least two of the following carbon acids is used as esterification components:
- acetic acid,
- propanoic acid,
- butyric acid,
- valerianic acid.

2. Moulding mass or polymer blend according to claim 1, comprising a component of 10 to 80 volume % of thermoplastically processible starch and as remaining component at least partly cellulose ester.

3. Moulding mass or polymer blend according to claim 1 or 2, comprising a component of 20 to 50 volume % of thermoplastically processible starch.

4. Moulding mass or polymer blend according to one of claims 1 to 3, characterised thereby that the phase agent is selected from the list of following materials:
- partly hydrolysed polyvinyl acetate or polyvinyl acetate / polyvinyl pyrrolidine block copolymer, or
- polyvinyl acetate, which is copolymerised with small amounts of maleic acid anhydride, or polyvinyl acetate, which is copolymerised with small amounts of acryl acid glycide ester.

5. Method of manufacturing a moulding mass or a polymer blend according to one of claims 1 to 4, characterised thereby that 10 to 80 volume % of substantially water-free thermoplastically processible starch, 5 to 25 volume % of the phase agent and the balance of cellulose ester are mixed at elevated temperature into a melt, wherein the phase agent serves the purpose of enabling an improvement of the adhesion of the two phases in the melt by physical interaction and/or chemical reaction with the cellulose ester phase and the phase of the thermoplastically processible starch.

6. Method according to claim 5, characterised thereby that the mixing takes place in a temperature range of 160 to 200°C in the melt.

7. Method according to one of claims 5 and 6, characterised thereby that 20 to 50 volume % of thermoplastically processible starch, 30 to 60 volume % of the cellulose ester with 5 to 25 volume % of a phase agent are intimately mixed together or kneaded at a temperature of about 160 to 200°C and the at least almost homogeneous mass is subsequently extruded or processed by means of injection moulding.

8. Injection-moulded article or extrusion substantially consisting of a moulding mass or a polymer blend according to one of claims 1 to 4.

## Revendications

1. Masse moulée ou mélange polymère biodégradable ayant une résistance accrue vis-à-vis de l'eau, contenant au moins de l'amidon thermoplastiquement transformable, un ester de cellulose ainsi que de 5 à 25 % en volume d'un médiateur de phase qui permet par une interaction physique et/ou par une réaction chimique, avec la phase d'ester de cellulose et la phase d'amidon thermoplastiquement transformable, une amélioration de l'adhésion des deux phases,
dans lequel
le médiateur de phase est choisi dans la liste des matériaux suivants :
- des copolymères « séquencés » qui consistent au moins en deux séquences A et B dont au moins l'une est miscible à la phase de l'amidon thermoplastiquement transformable et au moins l'une est miscible au moins partiellement à la phase d'ester de cellulose,
- des copolymères réactifs qui portent des groupes réactifs et peuvent ainsi entrer dans une liaison covalente avec l'amidon et/ou la phase ester de cellulose,
- de l'huile de soja époxydée,
de l'acétate d'amidon.
- un copolymère greffé d'amidon dans lequel un polymère compatible avec l'ester de cellulose correspondant est lié par une liaison covalente avec l'amidon,
- un copolymère greffé de cellulose dans lequel la molécule d'ester de cellulose est greffée avec le polymère compatible avec l'amidon,
- le citrate d'acétyltriéthyle ou un ester d'acide phtalique et dans lequel l'amidon thermoplastiquement transformable ne comprend pas d'amidon déstructuré,
et dans lequel on utilise comme ester de cellulose un acétate de cellulose, un propionate de cellulose et/ou un butyrate de cellulose ou un mélange de ceux-ci, ou un ester mixte dont la fabrication utilise comme composant d'estérification un mélange d'acides contenant au moins deux des acides carboxyliques suivants :
- acide acétique
- acide propionique,
- acide butyrique,
- acide valérianique.

2. Masse moulée ou mélange de polymères selon la revendication 1, contenant une proportion de 10 à 80 % en volume d'amidon thermoplastiquement transformable et comme produit résiduel au moins partiellement un ester de cellulose.

3. Masse moulée ou mélange de polymères selon l'une des revendica tions 1 ou 2, contenant une proportion de 20 à 50 % en volume d'amidon thermoplastiquement transformable.

4. Masse moulée ou polymère selon l'une des revendications 1 à 3,
**caractérisée en ce que**
le médiateur de phase est choisi dans la liste des matériaux suivants :
- acétate de polyvinyle partiellement hydrolysé ou copolymère séquencé acétate de polyvinyle polyvinylpyrrolidone ou
- acétate de polyvinyle qui est copolymérisé avec de faibles quantités d'anhydride maléique ou acétate de polyvinyle qui est copolymérisé avec de faibles quantités d'esters de glycidyle d'acide acrylique.

5. Procédé de fabrication d'une masse moulée ou d'un mélange de po lymères selon l'une des revendications 1 à 4,
**caractérisé en ce que**
de 10 à 80 % en volume d'amidon thermoplastiquement transformable essentiellement anhydre sont mélangés à 5 à 25 % en volume du médiateur de phase et au restant d'ester de cellulose à température accrue dans la masse fondue, dans lesquels le médiateur de phase sert à permettre par interaction physique et/ou par réaction chimique avec la phase d'ester de cellulose et avec la phase d'amidon thermoplastiquement transformable une amélioration de l'adhésion des deux phases dans la masse fondue.

6. Procédé selon la revendications 5,
**caractérisé en ce que**
le mélange s'effectue dans une plage de températures allant de 160 à 200°C dans la masse fondue.

7. Procédé selon l'une des revendications 5 ou 6,
**caractérisé en ce que**
de 20 à 50 % en volume en amidon thermoplastiquement transformable, de 30 à 60 % en volume de l'ester de cellulose sont mélangés ou malaxés avec de 5 à 25 % en volume d'un médiateur de phase, à une température d'environ 160 à 200°C, et la masse au moins à peu près homogène est ensuite extrudée ou transformée au moyen de la technique du moulage par injection.

8. Pièce moulée par injection ou produit d'extrusion consistant pour l'essentiel en une masse moulée ou un mélange de polymère selon l'une des revendications 1 à 4.
